# EUROPÄISCHE PATENTSCHRIFT

(11) **EP 0 624 500 B1**
(45) Veröffentlichungstag und Bekanntmachung des Hinweises auf die Patenterteilung: **16.04.1997**
(21) Anmeldenummer: 94250123.0
(22) Anmeldetag: 11.05.1994
(51) Int. Cl.: B61D 15/00, B61D 15/08, B60J 5/08

(54) **Inspektions- und/oder Reparaturfahrzeug**
Vehicle for inspection and repair
Véhicule de réparation et d'inspection

(30) Priorität: 11.05.1993 DE 4316663
(43) Veröffentlichungstag der Anmeldung: 17.11.1994
(73) Patentinhaber: DEUTSCHE BAHN AG, 10365 Berlin (DE)
(72) Erfinder: Krauspe, Manfred, D-14789 Wusterwitz (DE); Bischkopf, Thomas, D-14772 Brandenburg (DE); Mielitz, Michael, D-14774 Brandenburg (DE)

(56) Entgegenhaltungen:
- EP-A- 0 433 935
- DE-A- 2 658 470
- DE-A- 3 533 216
- FR-A- 1 013 189
- GB-A- 899 180
- EB ELEKTRISCHE BAHNEN, Bd.90, Nr.3, März 1992, MÜNCHEN, DE Seiten 107 - 110, XP264454 C. WESSELS 'FAHRLEITUNGSINSTANDHALTUNGSFAHRZEUGE'

## Beschreibung

Die Erfindung betrifft ein Inspektions- und/oder Reparaturfahrzeug mit auf einem antreibbaren Fahrgestell angeordneten Kabinen mit integrierter Arbeitsbühne für Inspektions-und/oder Reparaturarbeiten außerhalb des Fahrweges, sowie eine verschließbare behälterähnliche Einrichtung.

Die für den Zugbetrieb erforderlichen streckenbegleitenden Einrichtungen wie Fahrdrahtleitungen bedürfen einer ständigen Wartung und Überprüfung. Für derartige Arbeiten oder den Neubau von Fahrdrahtleitungen, deren Halterungen und ähnliches sind eine Reihe von Fahrzeugen bekannt, bei denen sich im wesentlichen auf einem antreibbaren Fahrzeug Hubeinrichtungen für Personen befinden, die z.B. an der Oberleitung arbeiten sollen.

Ein solches Fahrzeug ist aus der EP-A2 0 345 538 bekannt. Ein Zwei-Wege-Fahrzeug mit einseitigem Führerhaus und einem Werkstattraum hat auf einem Dach eine teleskopierbare Arbeitsbühne, die durch eine Leiter am Ende des Fahrzeuges erklommen werden kann. Auf der Arbeitsbühne ist mindestens eine Hebelstange für Oberleitungen installiert. Die Arbeitsplattform kann durch einen Teleskopzylinder oder eine scherenartige Hebevorrichtung angehoben und abgesenkt werden unter das Lichtraumprofil unmittelbar auf das Dach des Werkstattraumes. Die Plattform verfügt außerdem über ein Sicherheitsgeländer, an dem offensichtlich eine Beleuchtungseinrichtung für das Arbeiten auf der Plattform befestigt ist. Das Gerät ist nur ungünstig rückwärts fahrbar, weil der Fahrer bei Rückwärtsfahrt sichtbehindert ist. In wieweit das Fahrzeug über Prüfplätze für die Oberleitung verfügt, ist nicht offenbart.

Eine ähnliche Plattform mit zusätzlichem Arbeitskorb sowie einem Strommeßbügel, einer Fernsehkamera und in dem Werkstattraum angeordnete Kontroll- und Aufzeichnungsgeräte sind aus der DE-C2 28 04 944 bekannt, wobei die Bühenplattform an sich nur senkrecht gehoben werden kann, während die Arbeiten außerhalb der Gleisbereiche durch einen zusätzlichen hydraulisch teleskopierbaren Arm mit Arbeitskorb ausführbar sind. Die Plattform weist eine komplizierte Mechanik zur Aufrichtung der bei Marschfahrt eingeklappten Sicherheitsgeländer auf. Dies ist erforderlich, um die Lichtraumhöhe des Fahrweges nicht zu überschreiten, wenn das Fahrzeug in Marschfahrt ist. In dem Aufbau des Fahrzeuges auf dem Fahrgestell, einer Umhausung, sind zwei Fahrstände für Vorwärts- und Rückwärtsfahrt des Schienenfahrzeuges angeordnet sowie offensichtlich ein Werkstattraum zwischen den Fahrständen. Die Arbeitsbühne wird hydraulisch durch einen Zylinder, der in mitten des Schienenfahrzeuges angeordnet ist angehoben. Nachteilig ist bei dieser Anordnung, daß die Bühne stets eingeklappt werden muß und zum Erreichen von Positionen außerhalb der Gleismitte zusätzlich ein hydraulisch schwenkbarer Arbeitskorb erforderlich ist. Die Bühnenplattform und/oder der Arbeitskorb können offensichtlich nur durch einen seitlichen Aufstieg an der Umhausung des Fahrzeuges erreicht werden.

Aus der DE-C3 26 58 470 ist ein ähnliches Schienenfahrzeug bekannt, daß allerdings keine Hubplattform enthält, sondern lediglich einen über Teleskoparm beweglichen Arbeitskorb. Dieser Arbeitskorb wird durch eine zentral im Fahrzeug gelegene Drehsäule und ein hydraulisch antreibbares Gestänge in die Sollpositon gehoben. Zur Vermeidung der Überschreitung des Lichtraumprofiles sind Teile des Hubgestänges in eine Dachöffnung der Umhausung des Schienfahrzeuges derart integriert, indem der Aufbau mit einem Rücksprung im Dach versehen ist. Das Schienenfahrzeug weist ebenfalls zwei Fahrstände auf sowie Aufenthaltsräume für die Bedienungsmannschaft und eine Werkstatt und Vorratsräume zur Unterbringung der für die Wartung der Fahrdrahtbauteile erforderlichen Geräte. Die Bedienung des Arbeitskorbes erfolgt offensichtlich von einem Fahrstand aus; gleiches gilt für die Langsamfahrt des Fahrzeuges bei Inspektion des Fahrdrahtes.

Aus der EP-A2 0 433 935 ist ein weiteres Fahrzeug dieser Art bekannt, bei dem die Dachfläche des Aufbaues im Bereich des Drehschemels für die Arbeitsbühne mit einer Öffnung versehen ist, so daß die Hebebühne und der mit Ihr verbundene Ausleger im abgesenkten Zustand wenigstens teilweise innerhalb des Aufbaues angeordnet ist. Auf dem Dach des Fahrzeuges befinden sich weitere Geräte, wie ein Strommeßbügel und ein Ladekran mit Arbeitskorb. Erwähnt ist in dieser Offenlegungsschrift ein weiteres Fahrzeug, daß für Arbeiten an der Fahrleitung, welche eine geräumige Hebebühne unmittelbar oberhalb des Aufbaues aufweist, die mit Hilfe einer scherengitterartig ausgebildeten Höhenverstelleinrichtung vertikal verstellt werden kann und in der Endposition um eine vertikale Achse in horizontaler Ebene endlos drehbar ist. Die Bühne kann zur Materiallagerung benutzt werden. Das Sicherheitsgitter ist im eingezogenen Zustand der Bühne zu demontieren oder umzuklappen, damit das zulässige Lichtraumprofil bei Marschfahrt nicht überschritten wird. Innerhalb des Fahrzeuges sind endseitig Fahrkabinen und eine Arbeitskabine zur Beobachtung des Meßbügels angeordnet. Die Arbeitsbühne kann durch eine Aufstiegsleiter innerhalb des Gerätes, die bis zum Dach führt, bestiegen werden. Nachteilig ist, daß für das Arbeiten an der Oberleitung zwei Geräte benötigt werden, um auch außerhalb der Gleismitte z.B. den Ausleger eines Fahrdrahtes erreichen zu können. Im übrigen ist natürlich bei allen außerhalb eines Fahrzeug gelegenen Arbeitskörben und Hebebühnen nachteilig, daß sie zur Einhaltung des Lichtraumprofiles demontier-oder zusammenklappbar ausgestaltet sein müssen und zusätzlich noch der Verschmutzung ausgesetzt sind.

Aus der DD-A5 298 082 ist eine über Ketten hebbare Arbeitsbühne bekannt, die mittels Leiter bestiegen werden soll, um von dort aus die Oberleitung zu reparieren oder zu inspizieren. Das schienengängige Fahrzeug verfügt über einen Antrieb für Vorwärts- und Rückwärtsfahrt sowie einen Drehschemel auf dem Fahrgestell, der es ermöglicht die Arbeitsbühne in horizontaler Ebene zu drehen. Außerdem ist vorgesehen, die Plattform der Arbeitsbühne mit einem seitlichen Ausschub zu versehen. Fahrkabinen und/oder Werkstatträume für Prüfplätze sind nicht offenbart.

Es ist schließlich ein Fahrzeug bekannt, daß offensichtlich zwei Fahrstände aufweist und zwischen diesen mit einer Scherenhubbühne ausgestattet ist, die seitlich ausfahrbar ist und deren Plattform gegenüber einem Rahmen um mindestens 90° drehbar gelagert ist. Die Querschubeinrichtung und der Hubantrieb der Schere sind so gewählt, daß sie selbst im zusammengeklappten Zustand nur eine Mindesthöhe der Plattform entsprechend der Dachhöhe des Fahrzeuges erreichen. Die Plattform kann in Niedrigstposition durch eine Leiter auf dem Fahrzeug bestiegen werden. Das Fahrzeug soll offensichtlich extrem kleinbauend ausgeführt werden, um das Lichtraumprofil bei Marschfahrt nicht zu überschreiten.

Aus der GB-PS 899 180 ist ein aus einem Metallrahmen und mit Glasfasern verstärkter Kunststoff als Wände hergestellter Container bekannt, der auf Fahrzeugen als Einheit aufnehmbar ist und stirnseitig und/oder längsseitig mit Rolladen verschließbare Tore hat.
Eine Verwendung des Containers als Personenkabine eines Inspektionsfahrzeuges oder Umhausung für eine Arbeitsbühne ist nicht offenbart.

Ausgehend von diesem Stand der Technik liegt der Erfindung das Problem zugrunde, ein Fahrzeug für die Inspektion und/oder Reparatur von streckenbegleitenden Fahrwegseinrichtungen wie Tunnellüftungen, Oberleitungen und ähnliches vorzuschlagen, bei dem die Nachteile der Geräte gemäß dem Stand der Technik vermieden werden.
Das Problem wird erfindungsgemäß durch Anspruch 1 gelöst. Weiterbildungen der Erfindung sind in den Unteransprüchen erfaßt.

Die Erfindung sieht vor, daß möglichst mit einem einzigen Hubgerät alle Arbeitspositionen erreichbar sind, wobei ein sicheres Arbeiten mit dem Fahrzeug von nur zwei Personen ausführbar ist und die Arbeitsbühne in Sekundenschnelle für das Arbeiten an den Fahrwegseinrichtungen oder für Marschfahrt in Position gebracht werden kann.

Die Lösung umfaßt ein Inspektions- und/oder Reparaturfahrzeug mit zwei auf einem antreibbaren Fahrgestell vorn und hinten angeordneten, geschlossenen, Kabinen mit jeweils einem Fahrstand sowie einer zwischen den beiden Kabinen gelegenen, verschließbaren, dritten Kabine, die seitlich und nach oben komplett zu öffnen ist, und mindestens eine ausfahrbare Arbeitsbühne enthält, von der aus das Fahrzeug ebenfalls steuerbar ist, wobei die vordere und/oder hintere Kabine als Werkstattraum mit mindestens einer Prüfeinrichtung für Fahrwegseinrichtungen ausgebildet ist.

Damit wird erreicht, daß in Marschfahrt die Arbeitsbühne vor Umwelteinflüssen geschützt, in das Fahrzeugprofil integriert ist, empfindliche Teile wie die Steuerung für das Fahrzeug und das Hubgerät auf der Arbeitsbühne und gegebenenfalls weiteres dort gelagertes Werkzeug gegen Witterung und unbefugten Zugriff gesichert ist. Durch die Anordnung großzügiger Fenster in den Kabinenwänden wird eine Sicht quer durch das Fahrzeug durch alle drei Kabinen ermöglicht. Das Bedienungspersonal braucht keine Leiter bis zum Dach des Fahrzeuges zu erklettern, sondern kann direkt auf die Arbeitsbühne steigen. Gegebenenfalls kann das Geländer der Bühne als abklappbare Leiter ausgebildet sein. Von dort aus kann man sowohl die Bühne als auch das komplette Fahrzeug in Betrieb setzen. Zuvor können Werkzeug und weiteres Verbrauchsmaterial und/oder Ersatzteile gegen Witterung geschützt auf der Bühne plaziert werden. Neben der Person auf der Arbeitsbühne bedarf es lediglich einer weiteren Person, die gegebenenfalls von dem Fahrstand auf den Prüfplatz wechselt und dort entsprechende Prüfeinrichtungen bedient. Die Türen zur mittleren Kabine können von außen ver- und entriegelt werden.

Das erfindungsgemäße Fahrzeug soll für Inspektionsfahrten und Reparaturfahrten auf Eisenbahnstrecken eingesetzt werden. Dabei ist sowohl eine Distanz mit üblicher Zuggeschwindigkeit und geschlossener Umhausung zu überbrücken, als auch in Schleichfahrt z.B. eine Oberleitung in Höhen-und Seitenlage zu vermessen. Gegebenenfalls wird dabei ein Meßbügel zur Kontrolle der Oberleitung ausgefahren, durch Meßeinrichtungen dessen Bewegung ortsgetreu erfaßt und registriert, wobei unter anderem, wie für sich bekannt, eine Kamera und ein Scheinwerfer zur visuellen Kontrolle benutzt werden.
Andererseits soll das Fahrzeug auch für die Behebung von Defekten - oder generell - für Arbeiten seitlich der Fahrstrecke, insbesondere aber oberhalb des Fahrzeugdaches, z.B. auch zur Kontrolle oder Reparatur von Belüftungskanälen; Beleuchtungseinrichtungen und ähnliches in Tunneln eingesetzt werden.

In Weiterbildung dieser Erfindung besteht die dritte Kabine im wesentlichen aus einer teilbaren Umhausung für die Arbeitsbühne, deren Teilelemente z.B. als Klapp- und/oder Schwenkelemente sowohl für den seitlichen Verschluß der Arbeitsbühne, als auch für die Dachabdeckung ausgebildet sind und welche mindestens teilweise mit der vorderen und hinteren Kabine z.B. mittels Drehverbindung gekoppelt sind. Dadurch wird erreicht, daß die Arbeitsbühne in ihrem Profil nach Aufklappen der Türen vollkommen frei beweglich ist.

In einer alternativen Ausführung können die Klapp- und/oder Schwenkelemente für die seitliche Öffnung der Umhausung mit der Arbeitsbühne selbst gekoppelt sein, während die abzuklappenden Dachelemente wiederum mit der vorderen und/oder hinteren Kabine drehgelenkig verbunden sind. Eine solche Anordnung ermöglicht es beispielsweise, daß die Türelemente der Kabine gleichzeitig das Sicherheitsgeländer der Arbeitsbühne bilden.

In einer Ausführungsform der Erfindung werden die Klapp- und/oder Schwenkelemente, zumindestens die seitlichen Türen der Umhausung der Arbeitsbühne in geöffnetem Zustand in den Zwischenraum zwischen Arbeitsbühne und der vorderen bzw. hinteren Kabine eingefügt, indem sie über ein Dreh-Schiebe-Gelenk in den Zwischenraum geschoben werden, nachdem die Türen zunächst um 90° aufgeklappt wurden.

Außerdem ist vorgesehen, daß mindestens Teile des Daches der dritten Kabine auf das benachbarte Dach der anderen Kabine geklappt werden und an der Unterseite dieser Teile eine Leuchte und/oder eine Kamera befestigt sind. Dadurch wird erreicht, daß die für das Arbeiten an dem Oberleitungsdraht notwendige Beleuchtung und die Fernübertragung in den Werkstattraum mittels Kamera in Position sind, schon bevor die Arbeitsbühne in die Sollposition gefahren wird. Andererseits sind die Leuchten und die Kameras jedoch bei Marschfahrt in die Umhausung des Fahrzeuges integriert und so vor Umwelteinflüssen und Beschädigungen geschützt.

Als weitere Umhausungen kommen infrage Faltdächer und/oder Hauben nach Art einer Ziehharmonika sowie Teleskop-Elemente und/oder Schiebeelemente wie Schiebetüren. Dazu wird allerdings ein Stauraum benötigt, so daß diese Varianten weniger bevorzugt werden.
Als weitere günstige Varianten sind jedoch Umhausungen vorgesehen, die nach Art von in Führungen laufenden Rolladen oder Segmenttoren abklappbar oder aufwickelbar sind. Derartige verschiebbare Teilelemente für die Umhausungen der mittleren Kabine können sowohl seitlich zwischen den Arbeitsbühnen und der vorderen oder hinteren Kabinen oder im Bereich des Fahrgestells in entsprechende Zwischenräume eingefügt werden, z.B. durch Falten oder Aufwickeln.
In einer optimalen Form wird eine unter der mittleren Kabine aufgewickelte Rollade je Kabinenseite von unten nach oben geschlossen, wobei sich beide Rolladen in dem Bereich des Daches der Kabine treffen und so eine dreiseitige Umhausung bilden. Zu den vorderen und hinteren Kabinen dienen stabile Führungsrahmen als Abschluß, an denen wiederum elastische Dichtlippen z.B. gummischlauchähnliche Wülste zum Verschluß der Lücken zu den Nachbarkabinen angebracht sind. Damit wird eine dichte, einfache und preiswerte Verschlußmöglichkeit für eine Umhausung der Arbeitsbühne, des mittleren Fahrzeugteiles, erreicht.
Schließlich kann die mittlere Kabine für sich oder in Kombination mit den benachbarten Kabinen als eigenes Behältnis ausgebildet sein. Dazu kann die Rolladenführung so als Rahmen ausgebildet sein, daß eine oder mehrere der übrigen Seiten des Behältnisses ebenfalls einen Rolladenverschluß erhalten. Aus ergonomischen oder räumlichen Gründen wird dabei ebenfalls eine von unten nach oben schließbare Rolllade bevorzugt, jedoch können auch maximal vier Seiten des zu verschließenden Raumes mit einer umlaufenden Rollade als Umhausung versehen sein.
Als Rolladenantrieb werden dabei wahlweise üblichen manuell oder maschinell antreibbare Gurte oder Seile alternativ auch Zahnriemen oder einem Kettenrad ähnliche Antriebsmittel eingesetzt, die in die Verbindungselemente der Rollade greifen können. Bevorzugt wird ein elektrisch betriebener, mit Schlüsselschalter vom Äußeren des Fahrzeuges schaltbarer Motor eingesetzt, der auf einen Seilzug wirkt.

Bei der Erfindung ist vorgesehen, daß die Arbeitsbühne als Scherenhubbühne ausgebildet ist, wobei die Schere aus einzelnen, in Drehpunkten gekoppelten, Hebelstangen zusammengesetzt ist und je zwei Hebelstangen außermittig durch einen Fluidzylinder spreizbar sind. Eine Scherenhubbühne ist allgemein für sich bekannt. Mit ihr ist eine größere Seitenstabilität zu erreichen, als mit einem einfachen Teleskopzylinder mitten unter der Hubbühne. Durch z.B. Kopplung benachbarter Hebelstangen durch Einzelzylinder kann die Zylindergröße auf ein Minimum beschränkt werden, sowohl was deren Kraft-/Durchmesserbereich betrifft, als auch deren Ausziehlänge. Die notwendige Ausziehlänge wird zusätzlich reduziert durch das außermittige Anordnen der Fluidzylinder, z.B. eines Hydraulikzylinders oder Preßluftzylinders, die von dem Hydraulikmotor des Fahrzeuges für Langsamfahrt und/oder einem bordeigenen Preßluftsystem antreibbar sind.

Zusätzlich ist vorgesehen, daß die Arbeitsbühne eine um +/-180° schwenkbare, auf einem Rahmen der Schere exentrisch gelagerte, Plattform aufweist, die auch gegenüber dem Rahmen seitlich ausfahrbar ist. Die gesamte Arbeitsbühne einschließlich der Schere ist auf einem Teleskopelement, z.B. einem Querschlitten seitlich zum Fahrzeug verfahrbar. Zusätzlich zu dieser Querfahrt kann nach Erreichen oder schon vor der Sollhöhe der Arbeitsbühne die Plattform gegenüber der Schere nochmals ausgefahren werden, um auch einen Bereich weit von der Gleismitte zu erreichen. Außerdem läßt sich die Arbeitsbühne schwenken, so daß jeder Punkt innerhalb des Arbeitsbereiches der Arbeitsbühne angefahren werden kann. Erfahrungsgemäß wird es das Bedienungspersonal vorziehen, nur mit dem Querschlitten und der seitlich ausfahrbaren Plattform die Sollposition zu erreichen, weil die Kombination diese Verschiebeelemente leichter durch Bedienung entsprechender Schalter einschätzbar ist, als ein kombiniertes Drehen und Querverschieben der Arbeitsbühne und/oder der Plattform. Zunächst muß allerdings für eine derartige zweiachsige Querverschiebung die Arbeitsbühne oberhalb des Fahrzeugdaches in eine Querposition zum Querschlitten gedreht werden.

Das Teleskopelement für das Querverschieben der Arbeitsbühne quer zur Fahrzeuglängsachse kann auch benutzt werden, um z.B. einen LKW, der auf einem Fahrweg parallel zum Gleis Material anliefert, zu erreichen, um von dessen Ladefläche ergonomisch günstig Geräte oder Material auf die Arbeitsbühne zu legen. Dazu sind die Kopfseiten / Schmalseiten der Arbeitsbühne zumindestens in der unteren Hubposition wegklappbar - oder nicht existent, weil durch die Türen der Umhausung ersetzt - während die Längsseiten der Arbeitsbühne feststehende Sicherheitsgitter haben können. Diese Sicherheitsgitter an den Längsseiten brauchen auch nicht demontiert oder weggeklappt zu werden, weil in abgesenkter Position die gesamte Hubbühne innerhalb des Fahrzeugaufbaues liegt.

Zur weitgehenden Vereinfachung der Montage und um eine rationelle Fertigung zu erreichen, sind die vordere und die hintere Kabine in Abmessung und Ausbildung der Umhausung identisch ausgebildet. Dadurch kann die Personenkabine und auch die Kabine, in der sich der Werkstattraum befindet, schon in der Fertigung vormontiert werden, wobei zumindest die äußere Umhausung und der Fahrstand durch Identität ihrer Ausbildung preiswerter zu fertigen und universell einsetzbar sind.

Schließlich soll erfindungsgemäß das Fahrzeug auch über Kabinen verfügen, die in Fahrzeuglängsrichtung gegenüber dem Fahrgestell einen Rücksprung als Stauraum für Langgut aufweisen. Das betrifft im Idealfall alle drei Umhausungen, sowohl die vordere und die hintere Kabine, als auch die Umhausung der Arbeitsbühne. Unmittelbar oberhalb des Fahrgestells ist dabei die Breite der Kabine etwas reduziert, um eine Auflagefläche für Langgut, z.B. Ausleger oder Stützgestänge für Oberleitungen mitnehmen zu können. Natürlich können diese Stauräume auch benutzt werden, um weiteres Werkzeug und Material zur Baustelle zu transportieren.

Anhand einiger Zeichnungen soll die Erfindung näher erläutert werden. Es zeigen
- Fig. 1: eine Seitenansicht eines Fahrzeuges mit teilweise geöffneter dritter Kabine,
- Fig. 2: eine Vorderansicht des Fahrzeuges ähnlich Fig. 1 mit ausgefahrener Arbeitsbühne,
- Fig. 3: einen schematisierten Schnitt in Draufsicht durch die Kabinen des Fahrzeuges gemäß Fig. 1,
- Fig. 4: eine Seitenansicht eines anderen Fahrzeuges ähnlich Fig. 1,
- Fig. 5: eine Draufsicht auf ein Fahrzeug gemäß Fig. 4.

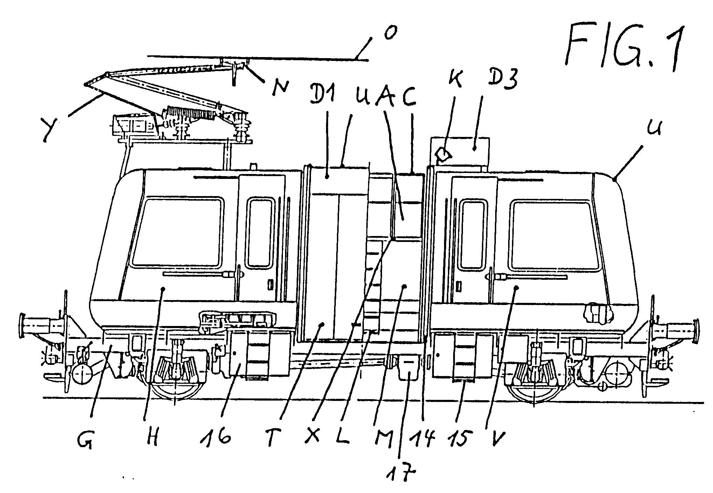

Fig. 1 zeigt ein Fahrzeug, das Personen, Materialien und Ausrüstungen befördern kann und mit unterschiedlichsten Geräten für die Revision von Oberleitungen oder sonstigen Gleisarbeiten bestückt ist. In der bevorzugten Form als Oberleitungsrevisionsgerät ist es mit zwei Kabinen V, H, einem Meßstromabnehmer oder Meßbügel N, einer Arbeitsbühne A und einem Generator 16 ausgerüstet. Das zweiachsige Schienenfahrzeug wird über Getriebe 17, welche auf beide Achsen wirken, angetrieben. Anschlußstellen zum Betrieb elektrischer und/oder hydraulischer Geräte - nicht dargestellt - sind am Fahrgestell und der Arbeitsbühne verfügbar. Dieselmotoren ermöglichen eine Höchstgeschwindigkeit von 80 kmh bei einer Anhängelast von 40 t.
Auf dem Fahrgestell G mit den beiden Radsätzen ist eine vordere Kabine V für Personentransport und eine hintere Kabine H als Werkstattraum angeordnet. Die Umhausungen U beider Kabinen sind identisch ausgebildet. Zwischen den Kabinen V, H ist eine dritte, mittlere Kabine M angeordnet, die der Aufnahme einer Arbeitsbühne und weiterer Ausrüstungsteile dient. Die Türen T der mittleren Kabine M sind teilbar und schwenkbar. Die Kabinen können über die am Fahrgestell G angeordneten Tritte 15 bzw. die Leiter L betreten werden. Für die Ankopplung an eine Oberleitung O dient dem Fahrzeug ein Gestänge Y mit Meßbügel bzw. Stromabnehmer N, die auf dem Dach der Kabine H einklappbar befestigt sind. Das Dach der mittleren Kabine M kann wie an den Klapp- und Schwenkelementen D1, D3 dargestellt, von der mittleren Kabine M weggeklappt und auf die vordere Kabine V und hintere Kabine H gefaltet werden. An der Unterseite der Dachteile D1 ist ein nicht dargestellter Scheinwerfer angebracht, der nach Aufklappen des Dachteiles auf den Meßbügel N gerichtet ist. An der Unterseite des klappbaren Dachteiles D3 ist eine Kamera K angeordnet, die nach Aufklappen der Dachteile ebenfalls auf den Meßbügel N ausgerichtet ist. Der Scheinwerfer ermöglicht die Lieferung ausreichend heller Bilder der Kamera K in das Innere, dem Werkstattraum der Kabine H. Die Plattform X der Arbeitsbühne A weist Sicherheitsgeländer C an den Seiten der Plattform auf. An der rückwärtigen Seite der Kabinen V in einem Zwischenraum zur Arbeitsbühne Teile 14 Türen T verstaut. Wenn die Dachklappen und die Seitentüren der Kabinen geschlossen sind, hat das gesamte Fahrzeug eine komplette Umhausung U, die Arbeitsbühne A, den Personalraum V und den Werkstattraum H komplett umschließen.

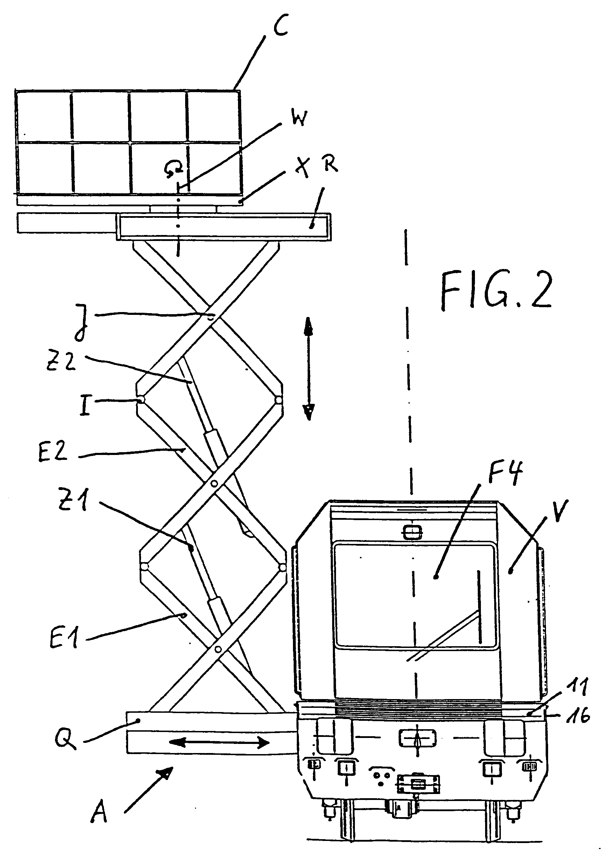

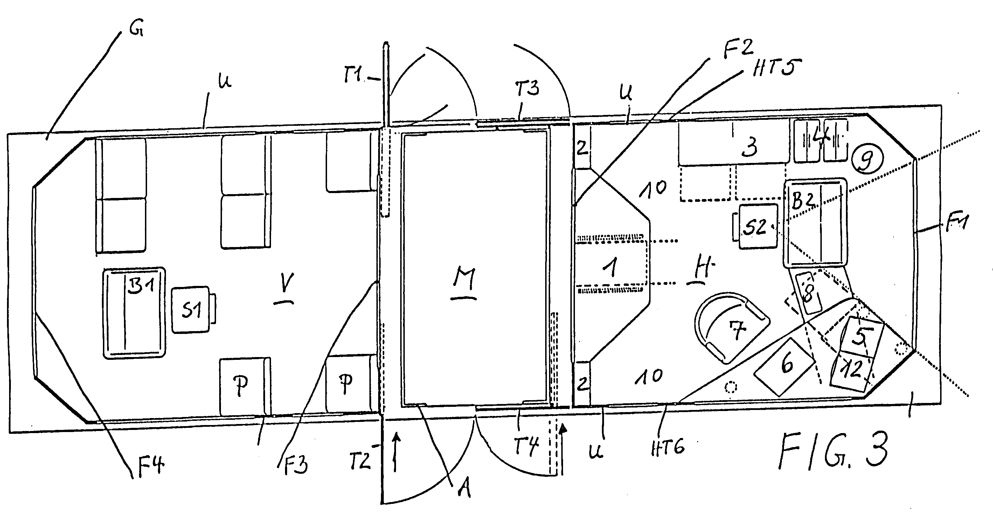

Fig. 2 zeigt eine Vorderansicht eines Fahrzeuges ähnlich Fig. 1 mit ausgefahrener Arbeitsbühne A. Großzügige Fenster F4 in der Kabine V zeigen, daß der Fahrer einen guten Überblick, sowohl in Fahrtrichtung als auch rückwärtig durch die ebenfalls in etwa gleichen Abmessungen gestalteten Fensterfronten F1, F2, F3 in den anderen Kabinenwänden (Fig. 3)hat. Die Kabinenumhausung U ist im Bereich unmittelbar über dem Fahrgestell G mit einem Rücksprung 11 - ebenso die dahinterliegenden Kabinen - versehen, um Platz zu schaffen für Langgut, das durch Rungen 16 in Position gehalten wird.

Die Arbeitsbühne A kann durch teleskopartig angeordnete Querschlitten Q sowohl nach links - wie dargestellt - als auch nach rechts aus der Fahrzeuglängsachse verfahren werden. Hebelstangen E1, E2 und weitere Hebelstangen sind in Drehpunkten I, J zu einer Schere miteinander gekoppelt, die außermittig durch Zylinder Z1, Z2 gespreizt werden können, um den Rahmen R der Arbeitsbühne mit der Plattform X auf die gewünschte Höhe zu heben. Die Plattform X ist gegenüber dem Rahmen R, um die Welle W exentrisch horizontal drehbar. Die Plattform X ist gegenüber dem Rahmen R durch einen Querschlitten ähnlich ist dem Querschlitten Q nochmals - wie dargestellt - seitlich zu verfahren. Die außermittige Anordnung der Zylinder Z1, Z2 relativ zu den Drehpunkten J erlaubt die Verwendung relativ bauender Zylinder. Die Schere einschließlich der Zylinder ist nur schematisch dargestellt. Die Hebelstangen E1, E2 und die weiteren sind aus stabilen Profilen geringster Abmessungen gefertigt, so daß die zusammengeklappte Schere nur eine Mindesthöhe entsprechend der additiven Dicke der Hebelstangen E benötigt.
Auf der Plattform X steht dem Bedienungspersonal ein Schalttableau - nicht dargestellt - zur Verfügung, von dem aus sowohl die Funktionen der Arbeitsbühne als auch der Antrieb 16 des Fahrzeuges geschaltet werden können. Zusätzlich sind auf der Plattform Anschlüsse für elektrische und hydraulische Geräte angeordnet. Die Plattform ist für eine Traglast von etwa 500 kg ausgelegt und läßt sich je nach Anforderung um +/- 180° schwenken und gegenüber der Scherenplattform teleskopieren, so daß die Plattform X sowohl längs als auch quer zur Gleismitte positioniert werden kann.

Erforderlichenfalls kann die Kabine V auch um - nicht dargestellte - Drehpunkte an ihrer Kopfseite gekippt werden, gegebenenfalls durch Unterstützung eines Hydraulikzylinders, um Wartungs- und Einstellarbeiten am Antrieb 16 des Fahrzeuges (Fig. 1), der unter der Kabine V gelegen ist, vorzunehmen.

Fig. 3 zeigt auf dem Fahrgestell G eine vordere Kabine V mit der Umhausung U und dem vorderseitigen Fenster F4 sowie dem rückseitigen Fenster F3. Die Kabine ist mit einem Sitz S1 für den Fahrer und einem Fahrpult B1 sowie 8 Personensitzen P ausgestattet. Die hintere Kabine H hat eine mit der vorderen Kabine baugleiche Umhausung U, mit den Fenstern F1, F2. Sie dient in diesem Fall als Fahrstand für den Fahrer mit Sitz S2 und Bedienungspult B2 sowie als Werkstattraum und Prüfraum für alle notwendigen Revisionsarbeiten an der Oberleitung. Dazu kann der Fahrer seinen Sitz S2 verlassen und am Prüfplatz 6 auf dem Prüfersitz 7 Platz nehmen. Er hat dann vor sich den Monitor 5 und einen Koordinatenschreiber 12 mit nicht dargestelltem Computer, in den er über eine Tastatur 8, die unter dem Prüfplatz 6 verschieblich gelagert ist, Prüfparameter eingeben kann. Das Fahrzeug kann über die Türen HT6 und HT5 sowie den Durchgang 10 betreten werden. Eine Werkbank 1 mit Schraubstock ermöglicht auch das Bearbeiten sehr langer Teile, indem die Türen HT5 und HT6 der Umhausung U geöffnet werden. Notwendige Werkzeuge befinden sich in Regalen 2, Ersatzteile in der Box 3. Ergänzend können Werkzeuge 4 mitgeführt werden, während ein Feuerlöscher 9 der Komplettierung der Ausrüstung dient. Die gesamte Kabine H ist ergonomisch optimal gestaltet und bietet auf engstem Raum sowohl einem Fahrstand S 2 als auch einem Werkbankarbeitsplatz 1 und einer Prüfeinrichtung für die Oberleitungsrevision Platz.

Zwischen den beiden Kabinen V und H ist eine mittlere Kabine M angeordnet, wobei die Arbeitsbühne A nur schematisch in ihren Umrissen dargestellt ist. Für die Türen T1 bis T4 bieten sich verschiedene Anordnungs- und Öffnungsmöglichkeiten an, von denen eine Auswahl im folgenden dargestellt ist. Die Tür T2 erstreckt sich über die halbe Breite der mittleren Kabine M, kann an einem Drehpunkt der vorderen Kabine V um 90° geöffnet und anschließend hinter die vordere Kabine V in den Zwischenraum zwischen der Arbeitsbühne A und der Kabine V eingeschoben werden. Die Kabinentür T1 ist ebenfalls an einem Drehpunkt der vorderen Kabine V angeschlagen, kann jedoch mit einem zusätzlichen Drehpunkt in Türmitte zunächst wie dargestellt, doppelt eingeklappt und anschließend in den Zwischenraum zwischen der vorderen Kabine V und der Arbeitsbühne A eingeschoben werden. Dabei ist es gleichgültig, ob die Tür die gesamte Breite der mittleren Kabine oder nur die halbe Breite einnimmt. Alternativ ist eine Tür T3 dargestellt, die als Gesamtverschluß für die mittlere Kabine M dient, zunächst um ihre Mitte nach außen um 180° geklappt wird und so an der Arbeitsbühne arretiert wird. Die Tür kann dann gleichzeitig als Geländer der Kopfseite der Arbeitsbühne dienen und gegebenenfalls wieder aufgeklappt werden, wenn die Arbeitsbühne bestiegen ist und eine Sicherung der Kopfseite der Arbeitsbühne A erforderlich ist. Als weitere Variante ist die Tür T4 dargestellt, die um einen Drehpunkt an der Ecke der Arbeitsbühne in den Zwischenraum zwischen der Kabine H und der Arbeitsbühne A eingeschoben werden kann.

Der hier nicht dargestellte Meßbügel mit dem Meßstromabnehmer ist ausgestattet mit Linealen, die einen Seitenschlag der Stromleitung visualisieren können, während der Höhenschlag durch Analogsensoren direkt ermittelt wird. Die ermittelten Werte werden über nicht dargestellte Meßleitungen auf den Schreiber 12 und den Monitor 5 in den Werkstattraum der Kabine H übermittelt. Während der Beobachtung der Fahrdrahtlage kann der Prüfer über das Kamera-Monitor-System in ergonomisch günstiger Sitzhaltung Messungen wetterunabhängig in der Kabine verfolgen.

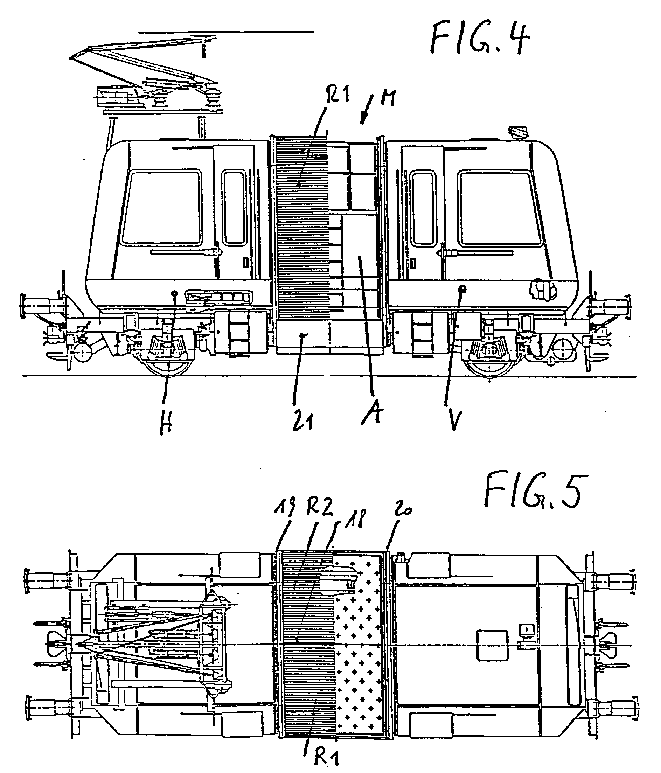

Die Fig. 4 und 5 zeigen eine alternative teilbare Umhausung eines weiteren Fahrzeuges, die als Rolladen R 1 und R 2 an der mittleren Kabine M ausgebildet ist. Die Rolladen R 1 und R 2 - hier im Teilschnitt dargestellt - verschließen die gesamte Breite der Kabine M zum Verschließen der Arbeitsbühne A. Von einer Aufwickeleinrichtung 21 aus können die Rolladen R 1, R 2 mit Hilfe der seitlichen, stabilen Führungsrahmen 19, 20 bis zur Dachmitte 18 hin hochgezogen und dort arretiert werden.
Zur Kabine H beziehungsweise V hin sind die Führungsrahmen 19, 20 mit Dichtprofilen verschlossen (nicht dargestellt).

Die Beschreibung zeigt, daß sämtliche Meßsysteme, Werkzeuge und Arbeitsgeräte, wetterunabhängig zur Baustelle gefahren werden können und während der Nichtbenutzung sicher in einer geschlossenen Umhausung des Fahrzeuges untergebracht sind.

## Patentansprüche

1. Inspektions- und/oder Reparaturfahrzeug mit zwei auf einem antreibbaren Fahrgestell (G) vorn und hinten angeordneten, geschlossenen Kabinen (V, H), mit jeweils einem Fahrstand (S, B) sowie einer zwischen den beiden Kabinen gelegenen, verschließbaren, dritten Kabine (M), deren Umhausung (U) seitlich und oben komplett zu öffnen ist, und mindestens eine ausfahrbare Arbeitsbühne (A) enthält, von der aus das Fahrzeug ebenfalls steuerbar ist, wobei die vordere und/oder hintere Kabine (V, H) als Werkstattraum mit mindestens einer Prüfeinrichtung für Fahrwegseinrichtungen ausgebildet ist.

2. Fahrzeug nach Anspruch 1, dadurch gekennzeichnet, daß die dritte Kabine (M) eine teilbare Umhausung (U) hat, von der mindestens einige Teilelemente (T, D, R 1, R 2) mit anderen Teilen des Fahrzeuges gekoppelt sind.

3. Fahrzeug nach Anspruch 1 oder 2, dadurch gekennzeichnet, daß die Umhausung (U) der dritten Kabine (M) im wesentlichen aus Klapp- und/oder Schwenkelementen (T, D) besteht, welche mindestens teilweise mit der Arbeitsbühne (A) und/oder den benachbarten Kabinen (V, H) verbunden sind.

4. Fahrzeug nach einem der Ansprüche 1 oder 2, dadurch gekennzeichnet, daß die Umhausung der dritten Kabine (M) im wesentlichen aus zwei Rolladen (R 1, R 2) besteht, die vom Fahrgestell (G) her zur Mitte (18) des Daches der Kabine (M) hin schließbar sind.

5. Fahrzeug nach einem der Ansprüche 1 bis 4, dadurch gekennzeichnet, daß die Teilelemente (R 1, R 2, T, D) der Umhausung der geöffneten dritten Kabine (M) in einen Zwischenraum neben oder unter der Arbeitsbühne (A) einfügbar sind.

6. Fahrzeug nach einem der Ansprüche 1 bis 5, dadurch gekennzeichnet, daß mindestens Teile (D1, D4) des Daches der dritten Kabine (M) auf das benachbarte Dach der anderen Kabinen (V, H) klappbar sind und an der Unterseite dieser Teile eine Leuchte (L) und/oder eine Kamera (K) befestigt ist.

7. Fahrzeug nach einem der Ansprüche 1 bis 6, dadurch gekennzeichnet, daß die Arbeitsbühne (A) als Scherenhubbühne ausgebildet ist, wobei die Schere aus einzelnen, in Drehpunkten (I, J) gekoppelten, Hebelstangen (E) zusammengesetzt ist und je zwei Hebelstangen außermittig durch einen Fluidzylinder (Z) spreizbar sind.

8. Fahrzeug nach einem der Ansprüche 1 bis 7, dadurch gekennzeichnet, daß die Arbeitsbühne (A) eine um +/-180° schwenkbare, auf einem Rahmen (R) der Schere exzentrisch gelagerte, Plattform (X) aufweist, die auch gegenüber dem Rahmen (R) seitlich ausfahrbar ist.

9. Fahrzeug nach einem der Ansprüche 1 bis 8, dadurch gekennzeichnet, daß die Arbeitsbühne (A) auf einem Teleskopelement (Q) quer zur Fahrzeuglängsachse verschiebbar ausgebildet ist.

10. Fahrzeug nach einem der Ansprüche 1 bis 9, dadurch gekennzeichnet, daß die Arbeitsbühne (A) Energieanschlüsse für Werkzeuge (4) aufweist.

11. Fahrzeug nach einem der Ansprüche 1 bis 10, dadurch gekennzeichnet, daß die vordere und hintere Kabine (V, H) in Abmessung und Ausbildung der Umhausung (U) identisch ausgebildet sind und jeweils rückwärtig Fenster (F) aufweisen.

12. Fahrzeug nach einem der Ansprüche 1 bis 11, dadurch gekennzeichnet, daß es als Revisionsfahrzeug für Oberleitungen (O) ausgebildet ist und die Prüfeinrichtung mindestens einen Prüfarbeitsplatz (5 bis 8) in einer Kabine (V, H) sowie einen Meßbügel (N) auf einer Kabine aufweist.

13. Fahrzeug nach einem der Ansprüche 1 bis 12, dadurch gekennzeichnet, daß zwischen den Kabinen (V, M, H) Dichtprofile angeordnet sind.

14. Fahrzeug nach einem der Ansprüche 1 bis 13, dadurch gekennzeichnet, daß mindestens Teile von Kabinen (V, H, M) in Fahrzeuglängsrichtung gegenüber dem Fahrgestell (G) einen Rücksprung (11) als Stauraum für Langgut aufweisen.

15. Fahrzeug nach einem der Ansprüche 1 bis 14, dadurch gekennzeichnet, daß mindestens eine Kabine als verschließbare Einrichtung mit beweglichen rolladenartigen Wandelementen (R 1, R 2), die in, für die benachbarten Seitenwände Rahmen bildenden, Führungen laufen und von einer am unteren Teil der Einrichtung angeordneten Wickelvorrichtung (21) her nach oben schließbar ausgebildet ist.

16. Fahrzeug nach Anspruch 15, dadurch gekennzeichnet, daß die rolladenartigen Wandelementen (R 1, R 2) gegenläufig schließbar sind, wobei zwei Wandelemente mit einer Breite entsprechend der Breite der Kabine zugleich als, eine dritte Seite der Kabine verschließende, Rollade ausgebildet sind, wobei die Führung mindestens eines Wandelementes sich auf die dritte Seite erstreckt.

## Claims

1. Vehicle for inspection and repair with two enclosed cabins (V, H) located at the front and rear of a chassis (G) able to be power driven, each with a control stand (S, B) and, located between the other two cabins, a third cabin (M) able to be closed off and the encasing housing (U) of which can be opened completely to the side and the top, and comprising at least one extendable working platform (A) from which the vehicle can also be controlled, and on which the front and/or rear cabin (V, H) is designed as a workshop with at least one testing facility for track installations.

2. Vehicle according to Claim 1 characterized by the fact that the third cabin (M) has a divisible encasing housing (U) of which at least some sub-elements (T, D, R 1, R 2) are coupled with other parts of the vehicle.

3. Vehicle according to Claim 1 or 2 characterized by the fact that the encasing housing (U) of the third cabin (M) consists essentially of hinged and/or swivelling elements (T, D) which are connected at least in part to the working platform (A) and/or the adjacent cabins (V, H).

4. Vehicle according to one of the Claims 1 or 2 characterized by the fact that the encasing housing of the third cabin (M) consists essentially of two roller shutters (R 1, R 2) which can be closed from the chassis (G) towards the centre (18) of the roof of the cabin (M).

5. Vehicle according to one of the Claims 1 to 4 characterized by the fact that the sub-elements (R 1, R 2, T, D) of the encasing housing of the opened third cabin (M) can be inserted into a space beside or below the working platform (A).

6. Vehicle according to one of the Claims 1 to 5 characterized by the fact that at least parts (D 1, D 4) of the roof of the third cabin (M) can be tilted onto the adjacent roof of the other cabins (V, H) and a lamp (L) and/or a camera (K) is mounted on the underside of these parts.

7. Vehicle according to one of the Claims 1 to 6 characterized by the fact that the working platform (A) is designed as a scissors-type lifting platform where the scissors arrangement is composed of individual lever arms (E) coupled in pivots (I, J) and two lever arms each can be spread eccentrically by a fluid cylinder (Z).

8. Vehicle according to one of the Claims 1 to 7 characterized by the fact that the working platform (A) has a platform (X) able to be swivelled by +/- 180° and supported on bearings eccentrically on a frame (R) of the scissors and which can also be extended to the side of the frame (R).

9. Vehicle according to one of the Claims 1 to 8 characterized by the fact that the working platform (A) is designed to be able to be moved transversely to the longitudinal axis of the vehicle on a telescopic element (Q).

10. Vehicle according to one of the Claims 1 to 9 characterized by the fact that the working platform (A) has power connections for tools (4).

11. Vehicle according to one of the Claims 1 to 10 characterized by the fact that the front and rear cabin (V, H) are identical in dimension and formation to the encasing housing (U) and each have windows (F) at the back.

12. Vehicle according to one of the Claims 1 to 11 characterized by the fact that it is designed as an inspection vehicle for overhead lines (O) and the testing facility has at least one testing workstation (5 to 8) in one cabin (V, H) and a measuring pantograph (N) on one cabin.

13. Vehicle according to one of the Claims 1 to 12 characterized by the fact that sealing sections are located between the cabins (V, M, H).

14. Vehicle according to one of the Claims 1 to 13 characterized by the fact that at least parts of the cabins (V, H, M) have a recess (11) in the longitudinal direction of the vehicle to the chassis (G) for stowing poles and similar long objects.

15. Vehicle according to one of the Claims 1 to 14 characterized by the fact that at least one cabin is designed as an installation able to be closed off with movable roller-shutter-type wall elements (R 1, R 2) which run in guide-rails constituting frames for the adjacent sidewalls and which can be closed upwards by means of a winding device (21) located at the bottom of the installation.

16. Vehicle according to Claim 15 characterized by the fact that the roller-shutter-type wall elements (R 1, R 2) can be closed in opposite directions with two wall elements of a width corresponding to the width of the cabin designed at the same time as a roller shutter closing off a third side of the cabin where the guide-rail of at least one wall element extends to the third side.

## Revendications

1. Véhicule d'inspection et/ou de réparation avec deux cabines (V, H) fermées, disposées à l'avant et à l'arrière sur un châssis (G) propulsable, avec respectivement un poste de pilotage (S, B) et une troisième cabine (M) pouvant fermer à clé située derrière les deux cabines, dont l'habitacle (U) est à ouvrir sur le haut et sur les côtés et contenant au moins une plate-forme de travail (A) déployable à partir de laquelle le véhicule peut également être commandé, la cabine avant et/ou la cabine arrière (V, H) étant conçue avec au moins un équipement d'essai pour les équipements de voie.

2. Véhicule selon la revendication 1, caractérisé par le fait que la troisième cabine (M) possède un habitacle sécable (U) dont au moins quelques éléments (T, D, R1, R2) sont coupés aux autres parties du véhicule

3. Véhicule selon la revendication 1 ou 2, caractérisé par le fait que l'habitacle (U) de la troisième cabine (M) se compose principalement d'éléments rabattables et/ou pivotants (T, D) qui sont, partiellement au moins, reliés à la plate-forme de travail (A) et/ou aux cabines voisines (V, H).

4. Véhicule selon la revendication 1 ou 2, caractérisé par le fait que l'habitacle de la troisième cabine (M) se compose principalement de deux volets roulants (R1, R2) qui peuvent être fermés à partir du châssis (G) vers le milieu (18) du toit de la cabine (M).

5. Véhicule selon l'une des revendications 1 à 4, caractérisé par le fait que les éléments partiels (R1, R2, T, D) de l'habitacle de la troisième cabine ouverte (M) peuvent être remisés dans un espace situé à côté ou sous la plate-forme de travail (A).

6. Véhicule selon l'une des revendications 1 à 5, caractérisé par le fait qu'au moins des parties (D1, D4) du toit de la troisième cabine (M) sont rabattable sur le toit voisin des autres cabines (V, H) et que la face intérieure de ces parties possède une lampe (L) et/ou une caméra (K).

7. Véhicule selon l'une des revendications 1 à 6, caractérisé par le fait que la plate-forme de travail (A) est conçue en tant que plate-forme relevable à parallélogrammes articulés, le parallélogramme étant constitué de bras de démultiplication (E) individuels accouplés en des points de rotation (I, J), et de respectivement deux bras de démultiplication excentriques extensibles grâce à un vérin à fluide (Z).

8. Véhicule selon l'une des revendications 1 à 7, caractérisé par le fait que la plate-forme de travail (A) présente un plateau (X) pivotant sur ± 180 ° positionné excentriquement sur un cadre (R) du parallélogramme, qui peut être aussi déployé latéralement par rapport au cadre (R).

9. Véhicule selon l'une des revendications 1 à 8, caractérisé par le fait que la plate-forme de travail (A) est conçue sur un élément télescopique coulissant transversalement par rapport à l'axe longitudinale du véhicule.

10. Véhicule selon l'une des revendications 1 à 9, caractérisé par le fait que la plate-forme de travail (A) dispose de raccords en énergie pour l'outillage (4).

11. Véhicule selon l'une des revendications 1 à 10, caractérisé par le fait que la cabine avant et la cabine arrière (V, H) sont de forme identique du point de vue cote et aspect de l'habitacle et disposent respectivement d'une fenêtre à l'arrière (F).

12. Véhicule selon l'une des revendications 1 à 11, caractérisé par le fait qu'il est conçu en tant que véhicule de révision des fils de contact (O) et que l'équipement d'essai présente au moins un emplacement de travail pour les tests (5 à 8) dans une cabine (V, H) ainsi qu'un archet de mesure (N) sur une cabine.

13. Véhicule selon l'une des revendications 1 à 12, caractérisé par le fait que des profilés d'étanchéité sont disposés entre les cabines (V, M, H).

14. Véhicule selon l'une des revendications 1 à 13, caractérisé par le fait qu'au moins des parties des cabines (V, M, H) présentent, dans le sens longitudinal du véhicule, par rapport au châssis (G) un retrait (11) en tant qu'espace de rangement pour marchandises longues.

15. Véhicule selon l'une des revendications 1 à 14, caractérisé par le fait qu'au moins une des cabines est conçue sous forme d'équipement fermant à clé avec des éléments de paroi mobiles de type volet roulant (R1, R2) qui coulissent dans des guides, formant le cadre des parois voisines, et peuvent être fermés vers le haut à l'aide d'un mécanisme d'enroulement (21) placé à la partie inférieure de l'équipement.

16. Véhicule selon l'une des revendications 1 à 15, caractérisé par le fait que les éléments de paroi de type volet roulant (R1, R2) peuvent être fermés par mouvement contraire, deux éléments de paroi d'une largeur correspondant à la largeur de la cabine étant conçus en même temps comme rideau fermant la troisième face de la cabine, le guide d'au moins un élément de paroi s'étendant à la troisième face.
